# EUROPEAN PATENT APPLICATION

(11) **EP 0 736 840 A2**
(43) Date of publication of application: **09.10.1996**
(21) Application number: 96420103.2
(22) Date of filing: 29.03.1996
(51) Int. Cl.: G06K 19/18

(54) **Magnetically encodable card having magnetic pigment uniformly dispersed in plastic and method of making such**

(30) Priority: 07.04.1995 US 418336; 07.04.1995 US 418731
(71) Applicant: EASTMAN KODAK COMPANY, Rochester, New York 14650-2201 (US)
(72) Inventor: Jagielinski, Tomasz Mark, c/o Eastman Kodak Comp., Rochester, New York 14650-2201 (US); Jeffers, Frederick John, c/o Eastman Kodak Comp., Rochester, New York 14650-2201 (US); James, Robert Owen, c/o Eastman Kodak Company, Rochester, New York 14650-2201 (US)
(74) Representative: Buff, Michel

(57) **Abstract**

A method for making a magnetically encodable card and a magnetically encodable card made of a solid plastic material having uniformly dispersed magnetic particles throughout the plastic material. The card is preferably formed of two major faces with connecting edges. Data can be recorded on one or both of the major faces, and can also be recorded on one or more of the card edges.

## Description

### FIELD OF THE INVENTION

The invention relates in general to magnetically encodable cards such as credit cards, debit cards, personal I.D. cards, employee security passes, door access cards, plastic money, chip cards for casinos, etc. More particularly this invention relates to a new and improved magnetically encodable card of solid plastic, having magnetic particles uniformly dispersed throughout the plastic card.

### BACKGROUND OF THE INVENTION

Magnetically encoded cards, such as credit cards, debit cards, personal identification cards, employee passes, security cards, door access cards, plastic money, casino chip cards, etc., have typically contained a magnetic strip on the back, to record magnetically encoded data. Such data can, for example, include the credit or debit card number, a personal identification number, an employee number, an access code, a security code, graphics, photo, money limits, as well as other information relating to the person and to the application of the card. one disadvantage of using a magnetic strip is that it is clearly visible and easy to change or erase the recorded information. Another disadvantage is that continued use of the card by swiping the magnetic strip through a reader causes degradation of the magnetic stripe and information recorded thereon. A further disadvantage is the limited recording capacity of the single magnetic strip.

The following patents disclose the use with identification cards of various magnetic layers or strips which do not satisfactorily solve the problems of the conventional magnetic strip card. U.S. Patent 3,975,574 issued August 17, 1976, inventor Saluke, discloses a magnetic coating for credit cards, including a magnetic coating comprised of magnetic pigments in a plastic binder placed on a transfer base. This type of credit card is disadvantageous in the likelihood of delamination of the magnetic coating from the transfer base. U.S. Patent 4,522,428, issued June 11, 1985, inventors Small et al., discloses a plastic identification card having a magnetic encoding panel printed by screen printing in a drop out area in a transparent protective coating. This type of magnetic plastic I.D. card suffers the same disadvantages listed above of conventional magnetic strip I.D. cards. U.S. Patent 3,860,796, issued January 14, 1975, inventors Wallace et al., discloses a plastic or cardboard credit card having indentations filled in with finely divided magnetic particles. This credit card is disadvantageous in the complexity and cost in manufacturing the credit card. U.S. Patent 3,601,913, issued August 31, 1971, inventor Pollock, discloses a magnetic transaction card formed with an identification article of non-magnetic material and with a layer of magnetic material on the identification article. This card suffers the disadvantage of delamination of the magnetic layer from the non-magnetic article. German Offenlegungsschrift 2829778, laid open January 17, 1980, discloses a credit or identity card carrying machine readable information and containing paper ply with plastic coating filled with fluorescent material of coarsely granular magnetic pigments. This card also suffers the disadvantages of delamination and magnetic layer degradation with increased use.

The following patents disclose various plastic articles having magnetic particles distributed in the plastic but which do not suggest such use in an ID card. U.S. Patent 5,272,216, issued December 21, 1993, inventors Clark, Jr., et al.; U.S. Patent 4,444,670, issued April 24, 1984, inventor Moslener; and U.S. Patent 5,235,243, issued August 10, 1993, inventor Tong.

There is thus a need to provide a method of making a magnetic information card having magnetic particles uniformly dispersed throughout without interfering with the neutral reflection density of the card without the presence of the magnetic particles.

There is thus a problem in providing a magnetically encodable card which is simple and inexpensive to manufacture, which has a long life without degradation of the magnetic layer or data recorded thereon, which eliminates delamination, and which provides expanded data recording capability.

### SUMMARY OF THE INVENTION

According to the present invention, there is provided a method of making a magnetically encodable card having ferromagnetic particles uniformly dispersed throughout by forming a dispersion of ferromagnetic particles in an organic fluid medium, intimately combining the dispersion with a thermoplastic resin, the thermoplastic resin being plasticized by the organic fluid medium to form a composite, and fabricating the composite into a magnetically encoded card. According to still another aspect of the present invention, the magnetically encodable card also may have dispersed therein various materials such as, abrasive particles, lubricants, dyes, and pigments that provide a reflective background so that pictorial information can be printed on a face of the card.

According to the present invention, there is provided a solution to the problems of the prior art. According to another aspect of the present invention, there is provided a solid plastic magnetically encodable card having magnetic particles uniformly dispersed throughout the plastic card.

According to another aspect of the present invention, the magnetic particles dispersed in plastic are of a high coercivity magnetic material, such as barium ferrite, to provide increased security by increased resistance to demagnetization of recorded information. However, low (e.g., gamma iron oxide) and medium (e.g., cobalt-modified gamma iron oxide) coercivity material can also be used. According to still another aspect of the present invention, the magnetically encodable card also has dispersed in it a material which provides a low reflection density surface so that pictorial information can be printed on a face of the card.

According to another aspect of the present invention, data is recorded on the edges of the card having uniformly dispersed magnetic particles therein.

According to another aspect of the present invention, the concentration of the magnetic particles in the card is low, or very low, to prevent contact duplication even if high coercivity particles are used. The card can also have a magnetic strip or memory chip added.

These and other aspects, objects, features and advantages of the present invention will be more clearly understood and appreciated from a review of the following detailed description of the preferred embodiments and appended claims, and by reference to the accompanying drawings.

### Advantages

The card according to the present invention has significant advantages over conventional I.D. cards having magnetic stripes. It is simple and inexpensive to manufacture it, it has a long life without degradation of the magnetic particles or data recorded thereon, it eliminates delamination, and it provides expanded data recording capability. Data can be written on the entire surfaces or edges of the cards without the addition of a magnetic stripe. Thus, the entire surface of the card can be used for image printing. Moreover, the amount of data that can be ultimately stored on the card according to the present invention is much higher than conventional cards, even at the same data density, since many more tracks can be added. Additionally, the life of the card is substantially increased over conventional cards because the entire volume of the card would have to be worn away before the magnetic media would be gone. Conventional cards can easily have the thin magnetic stripe worn off during normal usage. A further advantage of the card of the present invention, solves two problems of the credit card industry, i.e., stray field erasure and contact duplication. It has been found that 60% of card failures are due to having the magnetic stripe erased by stray fields. This problem can be solved by using high coercivity media for the magnetic stripe however, this makes duplication easier by contact duplication on a lower coercivity media. Therefore, much of the credit card industry does not use high coercivity media. In the card of the present invention, a high (4000 Oersted) media can be used to prevent stray field erasure without concern of contact duplication. Because the concentration of magnetic media is so low, the field from the card is too small to make duplicates on a second magnetic media. Since the particles are dispersed in the entire volume of the cards, even the accidental erasure of the surface of the card will not erase the information in the volume (true for low density recording). In addition, a low density signal can be recorded inside the card as an additional security feature.

### BRIEF DESCRIPTION OF THE DRAWINGS

In the detailed description of the preferred embodiments of the invention presented below, reference is made to the accompanying drawings in which like elements have like numbers.
Figure 1 is a perspective view of a magnetically encodable card according to the present invention;
Figure 2 is a cross-sectional view showing the uniform distribution of magnetic particles throughout the card of Figure 1;
Figures 3 and 4 are perspective views of a card showing regions for recording on the major surfaces and edges of the cards;
Figures 5 and 6 are respective side elevational and front elevational views of a system for recording on the major faces of a card according to the present invention;
Figures 7 and 8 are respective side elevational and front elevational views of a system for recording on the edges of a card according to the present invention;
Figures 9, 10, and 11 are graphical views useful in explaining the present invention.

### DESCRIPTION OF THE PREFERRED EMBODIMENTS

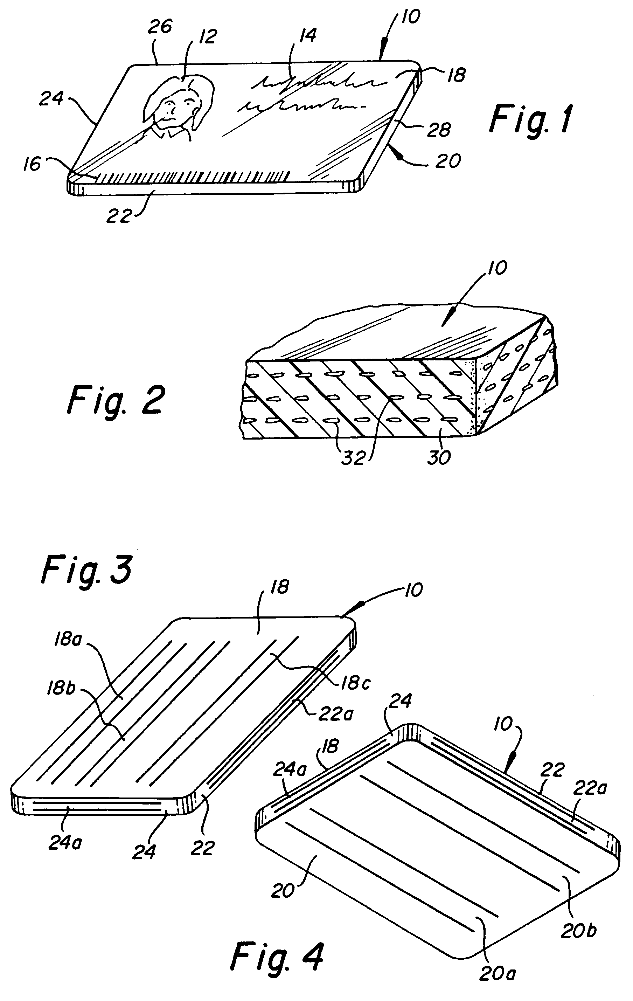

Referring now to Figure 1, there is shown a magnetically encodable card 10. Card 10 can encode any data, graphics, photos, etc., and can be used for any applications. Exemplary applications are a credit card, a debit card, a driver's license, an employee or personal I.D. card, security pass, door access card, plastic money, chip card for casino gambling, transportation card, etc. The card 10 can include printed matter on a surface thereof such as a photograph 12, written material 14, or a bar code 16. In general, card 10 includes two rectangular, elongated faces 18 and 20, and edges 22, 24, 26, and 28.

According to the present invention, card 10 is formed from solid plastic material 30 having magnetic particles 32 uniformly dispersed throughout the volume of card 10. Magnetic particles 32 may be of a high coercivity material such as barium ferrite or strontium ferrite, of a medium coercivity material, such as is used in the magnetic stripes of conventional ID cards or a very soft low coercivity material. Magnetic particles 32 may also be a mixture of low and high coercivity magnetic materials for recording of easy to erase and hard to erase data. Magnetic particles 32 may be made of materials having low and/or high Curie temperatures (T_{c}).

In accordance with the invention, any suitable ferromagnetic particle may be employed such as, for example, gamma-Fe₂O₃, cobalt-gamma-Fe₂O₃, Co-magnetite; ferromagnetic chromium dioxide, ferromagnetic metal particles, ferromagnetic alloy particles, barium ferrite, strontium ferrite, and mixtures thereof, and the like. It is preferred that the magnetic particles have a coercivity greater than 3000 Oe, therefore, barium ferrite and strontium ferrite are preferred. It is also preferred that the volume of magnetic particle in the card be in a range from substantially 0.001 percent to substantially 0.1 percent and most preferably in a range from substantially 0.01 percent to substantially 0.03 percent based upon the volume of the resin employed in making the card. These ranges are supported by the examples of the invention subsequently disclosed in this Application. This is preferable because the low density of the magnetic particle allows the achievement of a neutral reflection density of the card, thereby permitting indecia, images, polygrams, and the like on the card without having the interference of color from the presence of the magnetic particles. The low loading of the magnetic particles into the resin from which the card is formed in these small percentages also gives low remanant fields and prevents the card made in accordance with this invention from use for duplicating or counterfeiting, that is, from operating as a master media card which would readily permit the counterfeiting of lower coercivity cards because of the high coercivity of the material employed.

The ferromagnetic particles are dispersed in an organic fluid medium which when combined with a thermoplastic resin serves to plasticize the resin. Any suitable organic fluid medium having this characteristic may be employed in the method in accordance with this invention such as, for example, phosphate esters such as tricresyl phosphate; glycol esters, such as diethylene glycol mixed esters; phthalate esters such as dibutyl phthalate, dipropyl phthalate, dioctyl phthalate, and the like; alkyl stearates such as hexyl stearate, and butyl stearate; tetraethylene glycol dimethyl ether, ethyl acetate copolymers, lactams lower-alkyl esters of ethylene bis-glycolic acid, ether esters, or diesters of an alkylene glycol or a polyalkylene glycol, polyacrylic acid esters, polyvinyl acetate, and the like. The phthalate esters, particularly dibutyl phthalate is preferred. The plasticizer serves not only to provide for a uniform dispersion of the ferromagnetic particles in the organic fluid medium, but also enhances the flexibility of the card, thereby reducing embrittlement.

In the preparation of the dispersion of ferromagnetic particles in the organic fluid medium, it is preferred that a dispersing agent be included. Suitable dispersing agents include fatty acid amines, and commercially available wetting agents such as Witco Emcol CC59 which is a quaternary amine available from Wi t co Chemical Corp. Rhodafac PE 510, Rhodafac RE 610, Rhodafac RE 960, and Rhodafac LO 529 which are phosphoric acid esters available from Rhone-Poulenc. Further, the dispersing agent as set forth in U.S. Patent 5,395,743 which is sold by Zeneca Inc. under the trade designation Solsperse 24000 is preferred. Mixtures of the above-mentioned dispersing agents can also be employed.

After the dispersion of the ferromagnetic particles in the organic fluid medium is formed, a composite is next prepared by mixing the dispersion with a thermoplastic resin.

Any suitable thermoplastic resin may be employed as plastic material 30, such as, for example, polystyrene, polyamides, homo and copolymers of vinylchloride, polycarbonates, homo and copolymers of polyolefins, such as polyethylene, polypropylene, copolymers of ethylene and propylene; polyesters such as those prepared from dibasic carboxylic acids and divalent alcohols including succinic acid, dipic acid, phthalic acid, terephthalic acid, naphthalene dicarboxylic acid, and the lower alkyl esters thereof, and suitable glycols such as, for example, ethylene glycol, propylene glycol, butylene glycol, 1,4-cyclohexane dimethylol, polytetramethylene ether glycol, and the like; polyurethanes, and the like. Particular polyesters for use as a thermoplastic resin in accordance with this invention include polyethylene terephthalate, polyethylene naphthalate, and a copolymer of 1,4-cyclohexane dimethylol and ethylene glycol with terephthalic acid wherein the 1,4-cyclohexane dimethanol is used in a major amount.

Suitable pigments including metal oxides or mixtures of oxides, metal carbonates, and the like may be added to either the dispersion or to the compositing step in accordance with this invention in order to provide a bright white reflective surface suitable for receiving indicia, images, and the like including, titanium dioxide either in the anatase or rutile form, zinc oxide, silica, oxides of aluminum, zirconium oxide, tin oxides, and nacreous pigments, such as mica/titanium dioxide or bismuth oxychloride. The plastic material 30 may also have-dispersed therein particles that impart abrasion resistance and durability to the surface of the card for cleaning magnetic transducer heads so that digital information may be exchanged more reliably. Suitable such materials include powders, which are dispersed either into the dispersion or into the thermoplastic composite in accordance with the method of this invention such as, alpha alumina, gamma alumina, polycrystalline alpha-gamma alumina, alumino-silicates, titanium dioxide silica, tin oxide, antimony doped tin oxide, zirconium dioxide, chromium oxide, silicon nitride, and other powdered materials having a hardness generally greater than 6 on the MOH's scale.

Plastic material 30 can also include colored pigments or dyes to balance the optical reflection density in the visible region, thereby to provide desirable optical effects, including neutral density reflection for high light areas in image or pictorial information printed on the face of the information card such as blue dyes or pigments such as cobalt blue, ultramarine blue, or antimony doped tin oxide, or magenta dyes or pigments, such as, for example, quinacridone.

It may be desirable to employ an optical brightener that may be added in any step of the method in accordance with this invention. Suitable optical brighteners include thiophenes as set forth in U.S. Patents 3,449,257 and 3,501,298; stilbenes as set forth in U.S. Patent 4,794,071 triazines as disclosed in U.S. Patent 2,713,046; imidazolones as disclosed in U.S. Patents 2,571,706 and 2,723,197; pyrazolines as disclosed in UK Patent 669,590 and 712,764; and the like. Additional optical brighteners disclosed in Research Disclosure 308119, December 1989 in Section 5 may also be employed in the practice of this invention.

In order to provide low friction, sliding contact, between the card 10 and the head or transducer in the card reader or card writer, and thereby reduce surface scratching or marring, suitable lubricants may be incorporated therein, such as, for example, long chain fatty acids or esters thereof, such as, for example, stearic acid, metal stearates including zinc stearates, and the like. Polytetrafluoroethylene particles, silicone derivatives, and polymeric silicone compounds, such as polydimethylsiloxane, paraffin, carnauba wax, and the like.

Any suitable antioxidant may be added to either the dispersion or to the thermoplastic resin prior to forming the composite into an encodable card such as, for example, octadecyl 3(3',5' ditertbutyl 4' hydroxyphenyl) propionate (Irganox 1076); stearyl erucamide; butylated hydroxy toluene; butylated hydroxyanisole; 2,6-ditertbutyl-p-cresol, tetrakis[methylene 3-(3',5'-ditertbutyl-4'hydroxyphenyl propionate] methane; 2,2'-thiobis(6-tertbutyl-4-methyl phenol); tris(nonylphenyl)phosphate; distearylpentaerythritol diphosphite; and the like.

According to a feature of the present invention, the magnetic particles are present at very low concentrations in the body of the plastic card 10. In order to provide a uniform signal envelope and appropriate resolution of flux reversals, it is important to provide uniform dispersion of deaggregated magnetic powder particles throughout the body of the card and across the surfaces and along the edges of the card.

The method described here and in detail in the following examples can be used for the incorporation of magnetic particles, reflective particles, abrasive particles, lubricants, and dyes into the plastic card material. This method is based on making a predispersion of the desired component particle in an organic fluid medium that is also a polymer compatible plasticizer. Such predispersions provide high concentrations of particles that are composed mostly of single crystallites. When small quantities of these dispersions are mixed with polymer pellets or chips in a compounding apparatus, the oxide particles are easily and uniformly distributed throughout the polymer melt. The molten polymer is extruded from the compounder, chilled and pelletized to provide polymer pellets containing the magnetic particles, reflective particles, abrasive particles, dyes, and other desired components. These filledpolymer pellets are then used as the feedstock for a sheet extrusion machine or an injection molding machine to form a plastic sheet about 0.76 mm (30 mils) thick. If sheet extrusion is used, then cards are punched from the sheet using a die set of desired size. If injection molding is used, the cards are molded to the desired size and then trimmed.

### Dispersion Methods

Two small media dispersion methods are used to disperse the particles in the organic fluid plasticizer. In the first, the magnetic particles such as strontium ferrite are dispersed in dibutyl phthalate containing a dispersant using an Eiger Machinery Inc. 250 cm³. mill having stainless steel media (Chromanite, 1.3 mm beads) loaded to 90% by volume in the agitation chamber, using a shaft speed of 4,000 rpm for 7 hours.

In the second method the white reflective and abrasive pigments are placed in a glass walled vessel with dibutyl phthalate, a dispersant and zirconia/silica beads of 0.8 to 1.2 mm diameter.

The vessels are sealed and placed on a roller apparatus for 36 to 96 hours. In this second method, the white pigments are not discolored by the milling process.

For all particulate materials, the particle size is monitored using centrifugal size analysis (Shimadzu CP-SA3) and milling is stopped when the particle size is the same as or close to the manufacturer's equivalent particle size based on the specific surface area or other method.

### Compounding Method

The desired materials are mixed and compounded using a Welding Engineers Inc. twin screw compounding machine. This machine is a counterrotating, non-intermeshing compounder. The melt temperature is 219°C (426°F). The barrel profile range for the extruder is 196°C (384°F) to 213°C (415°F). A double reverse flight compounding section is added to the screw profile of the twin screw compounder to improve polymer-additive mixing through intense shear. This should also improve the dispersion and distribution of the magnetic and other particles as well.

The major groups of components for the compounding steps are:
1. PCTG 5445 pellets, a polyester copolymer of dimethyl terephthalate and ethylene glycol and 1,4-cyclohexanedimethylol sold by Eastman Chemical Company.
2. Pellets of 1 above containing 50 weight percent Tio2, and
3. Smaller amounts of the dispersions of the additives including the magnetic particles, the abrasive particles, reflective particles, and dyes, etc. When the compounding is completed, to form the composite, the filled polymer is extruded as through a multi-orifice die, chilled, and pelletized to provide the feedstock for a forming card shape.

### Card Formation

The filled polymer pellets are injection molded using a 250 ton VanDorn injection molding machine. The mold used is an ASTM plague, thickness 0.76 mm (0.030 inch),76 mm (3inch) long and 51 mm (2 inch) wide. The melt temperature range for all formulations is in the range 232°C (450°F) to 260°C (500°F).

The invention is further illustrated by the following examples in which parts and percentages are by weight unless otherwise indicated.

### Example 1

A 40% dispersion of strontium ferrite (Hoosier Secure Mag H, Hc 4400 Oe) in ethylene glycol is prepared in a 250 cm³ Eiger mill at 4000 rpm according to the following proportions:

| | Amount (g) |
|---|---|
| Strontium Ferrite | 280.0 |
| Polyethylene Glycol (Kodak, PEG 400) | 11.2 |
| Ethylene Glycol | 408.8 |
| | 700.0 |

The chemical composition of the strontium ferrite is approximately SrFe₁₂O₁₉ made by Hoosier Magnetics Group: Washington Plant, Indiana.

Part of this dispersion is blended into the natural PCTG polyester and the 50/50 TiO₂/PCTG concentrate set forth above and then compounded to provide pellets of the following composition.

| | Percent (%) |
|---|---|
| Tio:, (DuPont Rutile R-100) | 15.000 |
| SrFe₁₂O₁₉ | 0.132 |
| Ethylene Glycol | 0.198 |
| Polyester PCTG | 84.670 |
| | 100.000 |

These pellets are injection molded to form cards 0.76 mm x 76 mm x 51 mm (0.030" x 3" X 2") for testing.

### Example 2

A 45% dispersion of same strontium ferrite as in Example 1 in dibutyl phthalate (DBuPh) is prepared in a 250 cm³ Eiger mill at 4000 rpm according to the following proportions:

| | Amount (g) |
|---|---|
| Strontium Fenite | 360.0 |
| Rhodofac PE510 (Rhone-Poulenc) Dispersant w 3%, or Ferrite | 10.8 |
| Dibutyl Phthalate | 429.2 |
| | 100.0 |

Part of this dispersion is blended into the natural PCTG polyester pellets and the 50% TiO₂/PCTG pellets and then compounded to provide pellets of the following compositions:

| | Percent by Weight |
|---|---|
| TiO₂ | 15.000 |
| SrFe₁₂O₁₉ | 0.132 |
| Rhodofac PE510 | 0.004 |
| Polyester PCTG | 84.964 |
| | 100.000 |

These pellets are injection molded in the Van Dorn molding machine to provide cards 0.76 mm (0.030") thick, 76 mm (2") long, and 51 mm (3") wide.

In order to provide additional performance features for the information cards, other additives are formulated as concentrated dispersions in a plasticizer solvent for incorporation and compounding into polymer pellets along with the magnetic particle dispersions. These dispersions are prepared using the roller mill method described above.

### Rutile TiO₂ Dissersions

### Sample A

A 20% Rutile (R-100 DuPont) dispersion in dibutyl phthalate is prepared in the following proportions by weight by placing the components in a glass walled vessel together with zirconium silicate milling media.

| | Amount (g) |
|---|---|
| Titanium Dioxide (Rutile, R-100 DuPont) | 64.0 |
| Solsperse 24000 (Polymeric Dispersant, Zeneca Inc.) | 6.4 |
| Dibutyl Phthalate | 249.6 |
| | 320.0 |

After milling is completed, the median particle size is 0.32 µm.

### Sample B

A 35% dispersion of TiO₂ in dibutyl phthalate is prepared in a roller mill in similar fashion to Sample A using the following proportions:

| | Amount (g) |
|---|---|
| TiO₂ (DuPont R-100) | 112.0 |
| Solsperse 24000 | 11.2 |
| Dibutyl Phthalate | 196.8 |
| | 320.0 |

After milling is completed, the median particle is 0.31 µm.

### Sample C

A 45% dispersion of TiO₂ in dibutyl phthalate is prepared in a roller mill in similar fashion to Sample A using the following proportions:

| | Amount (g) |
|---|---|
| TiO₂ (DuPont R-100) | 144.0 |
| Solsperse 24000 | 14.4 |
| Dibutyl Phthalate | 161.6 |
| | 320.0 |

After milling, the median particle diameter is 0.30 µm.

### Alumina Abrasive Dispersions

A 20% dispersion of Sumitomo AKP-50, α-Al₂O₃ in dibutyl phthalate is prepared in the following proportions by placing the components in a glass walled vessel together with zirconium silicate milling media.

| | Amount (g) |
|---|---|
| AKP-50 (α-Al₂O₃) | 64.00 |
| Solsperse 24000 (Zeneca) | 5.12 |
| Dibutyl Phthalate | 250.88 |
| | 320.00 |

The vessel is rolled until the median particle diameter is 0.21 µm.

### Sample E

A 45% dispersion of Sumitomo AKP-15, α-Al₂O₃ in dibutyl phthalate is prepared in the following proportions by placing the components in a glass walled vessel together with 700 g of zirconium silicate milling media.

| | Amount (g) |
|---|---|
| AKP-15 (α-Al₂O₃) | 144.0 |
| Solsperse 24000 | 7.2 |
| Dibutyl Phthalate | 168.8 |
| | 320.0 |

The median particle diameter after 72 hours milling is 0.68 µm.

### Dispersion of Dyes

### Sample F

A 10% dispersion of the blue dye, cobalt blue CoAl₂O₄, is prepared with dibutyl phthalate by placing the components in the following proportions in a glass walled vessel on a roller mill with 350 g zirconium silicate milling media (0.8-1.2 mm).

| | Amount (g) |
|---|---|
| Cobalt Blue | 16.000 |
| Solsperse 24000 (Zeneca) | 1.280 |
| Dibutyl Phthalate | 142.720 |
| | 160.000 |

After milling, the median particle diameter is 0.47 µm.

### Sample G

A 15% dispersion of cobalt blue is prepared using the following proportions:

| | Amount (g) |
|---|---|
| Cobalt Blue | 90.0 |
| Solsperse 24000 | 7.2 |
| Dibutyl Phthalate | 502.8 |
| | 600.0 |

After milling, the median particle size is 0.36 µm.

### Sample H

A 10% dispersion of the magenta dye, Sunfast Magenta (a quinacridone pigment) in dibutyl phthalate is prepared by placing the components in the following proportions in a glass walled vessel on a roller mill together with 350 g zirconium silicate media for 3 days.

| | Amount (g) |
|---|---|
| Magenta dye (Sunfast Magenta) | 16.0 |
| Zeneca Solsperse 24000 | 1.28 |
| Dibutyl Phthalate | 142.72 |
| | 160.0 |

The median particle diameter of the magenta dye is 0.38 µm.

### Dispersion of Nacreous Pigment

### Sample I

A 40% dispersion of a nacreous pigment (Mearl Corp., Mearlin Supersilk, mica/titanium dioxide) in dibutyl phthalate is prepared by placing the components in the following proportions into a glass walled vessel on a roller mill together with 800 g of zirconium silicate media (0.8-1.2 µm).

| | Amount (g) |
|---|---|
| Supersilk (Mearl Corp.) | 144.0 |
| Solsperse 24000 (Zeneca) | 7.2 |
| Dibutyl Phthalate | 208.08 |
| | 360.0 |

The dispersion is milled for 3 days at 100 rpm.

### Compounding and Injection

Further examples of formulations for the preparation of filled polymer pellets for preparation of information cards are as follows:

### Example 3: Formulation of Polymer Pellets

The 45% strontium ferrite dispersion, Example 2, and the 45% rutile dispersion, Sample C, are premixed with polymer pellets in the following proportions to provide 10 kg of compounded, filled pellets.

| | Amount (g) |
|---|---|
| SrFe (w 45%) dispersion in DBuPh (Example 2) | 29.33 |
| Rutile (w 45%) dispersion in DBuPh (Sample C) | 44.44 |
| PCTG polymer (PCTG 5445) | 6986.23 |
| PCTG 50%/TiO₂ 50% | 2940.00 |
| | 10000.00 |

The pellets are composed of 0.132% strontium ferrite and 14.9% rutile TiO₂.

### Example 4

Formulation of polymer pellets using predispertions of magnetic ferrite, titanium dioxide, and fine particles of alpha_alumina.

The 45% strontium ferrite (Example 2), the 45% titanium dioxide (Sample C) and the 20% alpha alumina (Sample D) are premixed with polymer pellets in the following manner to provide a 10 kg batch.

| | Amount (g) |
|---|---|
| SrFe (w 45% in DBuPh) (Example 2) | 29.33 |
| Rutile (w 45%) DBuPh (Sample C) | 44.44 |
| α-Alumina (w 20%) in DBuPh (Sample D) AKP-50 | 50.00 |
| PCTG Polyester (PCTG 5445) | 6936.23 |
| 50% PCTG/50% TiO₂ | 2940.00 |
| | 10000.00 |

The final percent compositions of particulates are SrFe 0.132%, AKP-50 0.1%, Rutile 14.9% in the polymer card.

### Example 5

Formulation of polymer pellets using predispersions of magnetic powder, titanium dioxide, fine particle alpha alumina and dye.

| Dispersion | Amount (g) |
|---|---|
| SrFe (w 45% in DBuPh) (Example 2) | 29.33 |
| Tiov (w 45% in DBuPh) (Sample C) | 44.44 |
| α-Alumina (AKP-50 in DBuPh) (Sample D) | 50.00 |
| Cobalt Blue (w 10% in DBuPh) (Sample F) | 30.00 |
| PCTG 5445 | 6906.23 |
| 50% PCTG/50% TiO₂ | 2940.00 |
| | 10000.00 |

The compounded pellets contain particles in the following percentages. SrFe - 0.132%, rutile - 14.9%, α-Al₂O₃ - 0.2%, and blue dye - 0.03%.

### Example 6

Formulation of polymer pellets using predispersions of magnetic powder, titanium dioxide coarse particle alpha alumina and dye.

| Dispersion | Amount (g) |
|---|---|
| SrFe (w 45% in DBuPh) (Example 2) | 29.33 |
| TiO₂ (w 45% in DBuPh) (Sample C) | 44.44 |
| Coarse α-Al₂O₃(w 45% in DBuPh) (Sample E) | 44.44 |
| Cobalt Blue (D 10% in DBuPh) (Sample F) | 30.00 |
| Polyester PCTG 5445 | 6931.70 |
| Polyester 50% PCTG/50% TiO2 | 2940.00 |
| | 10000.00 |

when compounded, the pellets contain particles in the following percentages: SrFe - 0.132%, rutile - 14.9%, α-Al₂O₃ (AKP-15) - 0.2% and blue dye - 0.03%.

### Example 7

Formulation of polymer pellets using predispersions of magnetic powder, titanium dioxide, coarse particle Al₂O₃ (AKP-15) and dye weight basis. These mixtures are compounded and pelletized.

| Dispersion | Amount (g) |
|---|---|
| SrFe (w 45% in DBuPh) (Example 2) | 14.67 |
| TiO₂ (w 45% in DBuPh) (Sample C) | 44.44 |
| Coarse α-Al₂O₃ (AKP-15 w 45% in DBuPh) (Sample E) | 44.44 |
| Cobalt Blue (w 15% in DBuPh) (Sample G) | 66.00 |
| Polyester PCTG 5445 | 6990.46 |
| Polyester PCTG 50%/ TiO₂ 50% | 2840.00 |
| | 10000.00 |

When compounded, the pellets have the following particulate components:

| | Percent (%) |
|---|---|
| SrFe | 0.066 |
| TiO₂ | 0.200 |
| α-Al₂O₃ (AKP-15) | 0.200 |
| Blue Dye | 0.099 |

### Example 8

Formulation of polymer pellets using predispertions of magnetic powder, coarse Al₂O₃ (AKP-15), dye and nacreous pigment (Mearl Supersilk). These mixtures are compounded and pelletized.

| Dispersion | Amount (g) |
|---|---|
| SrFe (w 45% in DBuPh) (Example 2) | 29.33 |
| Coarse Al₂O₃ (w 45% in DBuPh) (Sample E) | 44.44 |
| Cobalt Blue (w 15% in DBuPh) (Sample G) | 44.44 |
| SupersiLt (Mica/ TiO₂) (at 40% DBuPh) (Sample I) | 88.00 |
| PCTG 5445 polyester | 6853.79 |
| 50% polyester PCTG/ TiO₂ 50% | 2840.00 |
| | 10000.00 |

When compounded the pellets have the following particulate components:

| | Percent (%) |
|---|---|
| SrFe | 0.132 |
| TiO₂ | 14.400 |
| α-Al₂O₃ (AKP-15) | 0.200 |
| Supersilk | 0.400 |
| Blue Dye | 0.132 |

### Example 9

Formulation of polymer pellets using predispersions of magnetic powder, coarse alumina (AKP-15), dye and rutile TiO₂ at high dye level to provide bluer hue. These mixtures are compounded and pelletized.

| Dispersion | Amount (g) |
|---|---|
| SrFe (w 45% in DBuPh) (Example 2) | 29.33 |
| Rutile (R-100 w 45% in DBuPh) (Sample C) | 44.44 |
| α-Alumina (AKP-15 w 45% in DBuPh) (Sample E) | 44.44 |
| Dye (Cobalt blue w 15% in DBuPh) (Sample G) | 106.67 |
| PCTG 5445 Polyester | 6835.12 |
| PCTG 50%/ TiO₂ 50% | 2940.00 |
| | 10000.00 |

When compounded, the pellets have the following particulate composition.

| | Percent (%) |
|---|---|
| SrFerrite | 0.132 |
| TiO₂ Rutile | 14.900 |
| α-Alumina | 0.200 |
| Cobalt Blue | 0.160 |

In general and as described previously, the method for making magnetically encodable cards having ferromagnetic particles uniformly dispersed throughout includes the steps of forming a dispersion of ferromagnetic particles in an organic fluid medium, intimately combining the dispersion with a thermoplastic resin, the thermoplastic resin being plasticized by the organic fluid medium to form a composite, and fabricating the composite into a magnetically encodable card. The magnetically encodable card may also have dispersed therein various materials, such as abrasive particles, lubricants, dyes, and pigments that provide a reflective background so that pictorial information can be printed on a face of the card.

According to the present invention, since the magnetic particles 32 are uniformly distributed throughout the volume of plastic 30, magnetic information can be recorded at any region on either face 18 or 20 thereof. Thus, instead of the limited recording area provided by the magnetic strip on a conventional card, a number of magnetic tracks can be provided on either or both surfaces 18 and 20 of card 10. Thus, as shown in Figure 3, card 10 has three tracks 18a, 18b, and 18c on face 18, and (Figure 4) two tracks 20a, and 20b on face 20. It will be understood that the number of tracks of recorded data shown in Figs. 3 and 4 are illustrative only and that there may be less or more tracks. Moreover, the data need not be recorded in tracks; but can be recorded in any desired format.

According to another feature of the present invention, because the magnetic particles 32 are uniformly dispersed throughout plastic material 30 of card 10, data can also be recorded along the edges 22, 24, 26 and 28 of card 10. Thus, as shown in Figures 3 and 4, transverse edge 24 has a magnetic track 24a and longitudinal edge 22 has a longitudinal track 22a. It will be understood that data can also be recorded along edges 26 and 28.

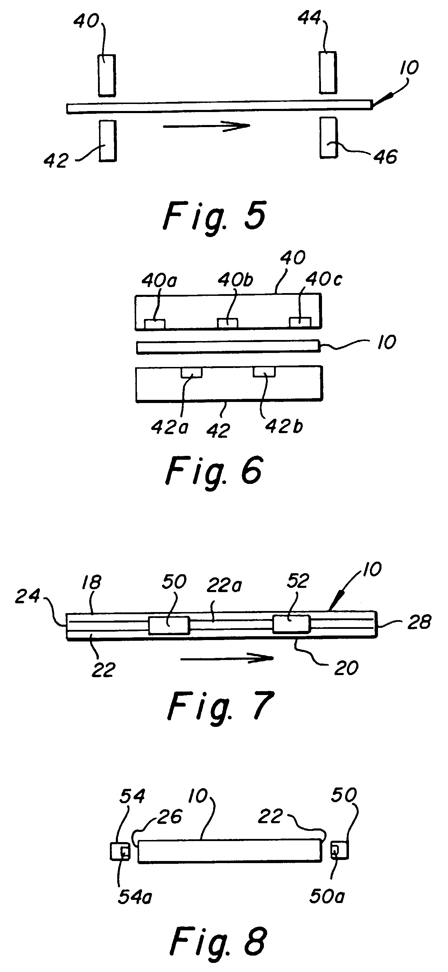

Referring now to Figures 5 and 6, there is shown a system for recording data on and for playing back data from the faces 18 and 20 of ID card 10. As shown, an upper record assembly 40 includes magnetic record heads 40a, 40b, and 40c for recording data respectively on recording tracks 18a, 18b, and 18c of card 10. Lower recording assembly 42 includes magnetic record heads 42a and 42b for recording data on record tracks 20a and 20b of card 10. Record heads 40a, 40b, 40c, 42a, and 42b may for example, be well known inductive type magnetic heads. As shown in Figure 5, playback magnetic head assemblies 44 and 46 are provided to play back data recorded on card 10. Although not shown, upper playback magnetic head assembly 44 is provided with the same number of playback heads as record assembly 40 and playback magnetic assembly 46 is provided with the same number of playback magnetic heads as record head assembly 42. The playback heads of playback assemblies 44 and 46 can, for example, be inductive or magnetoresistive heads or sensors. It is also possible to record or playback a multiplicity of tracks by stepping the head or heads.

Referring now to Figures 7 and 8, there are shown edge recording and playback magnetic head assemblies. As shown in Figure 7, a magnetic record head assembly 50 and a magnetic playback head assembly 52 is provided to record and play back data on track 22a of edge 22 of card 10. Figure 8 shows magnetic record head assemblies 50 and 54 having respective record heads 50a and 54a for recording data on edges 22 and 26 of card 10.

In general, card recording is done in a card writer, while reproduction of information is done in a separate card reader. The card reader can have single or multiple heads.

Other additives may be added to plastic 30 of card 10 in order to customize its properties. For example, titanium dioxide may be added to plastic 30 in addition to magnetic particles 32 to whiten card 10 so that images 12, 14 and 16 on surface 18 thereof, are reflected by the white background. Moreover, other colored dyes, antioxidants, anti-static agents, lubricants, and thermally responsive materials may be added to plastic 30 to provide suitable properties of card 10 to satisfy different applications thereof.

Conventional cards can easily have the thin magnetic stripe worn off during normal usage. A further advantage of the card of the present invention, solves two problems of the credit card industry, i.e., stray field erasure and contact duplication. It has been found that 60% of card failures are due to having the magnetic stripe erased by stray fields. This problem can be solved by using high coercivity media for the magnetic stripe; however, this makes counterfeiting or duplication easier by contact duplication on a lower coercivity media. Therefore, much of the credit card industry does not use high coercivity media. In the card of the present invention, a high (4000 oersteds) media can be used to prevent stray field erasure without concern of contact duplication. Because the concentration of magnetic media is so low, the field from the card is too small to make duplicates on a second magnetic media.

As used in this application, the phrase "uniformly dispersed throughout", as applied to the present invention, may be determined by means of a d.c. magnetization measurement test. In this test, the magnetically encodable card 10 is uniformly magnetized with a high or saturation d.c. field, for example, at 11 kilooersted, in which the field is parallel to the length of the card. The card is passed through a card reader and the resultant signal analyzed. If magnetic particles are present in large aggregates, these aggregates act as a large local magnetic dipole. When the card is passed through the card reader, the higher flux changes causes a higher RMS (root mean square) signal. Conversely for small well dispersed and distributed particles, the local flux changes are much smaller and when such a card is passed through a card reader, the signal is much smaller and less variable giving as a result a small RMS signal.

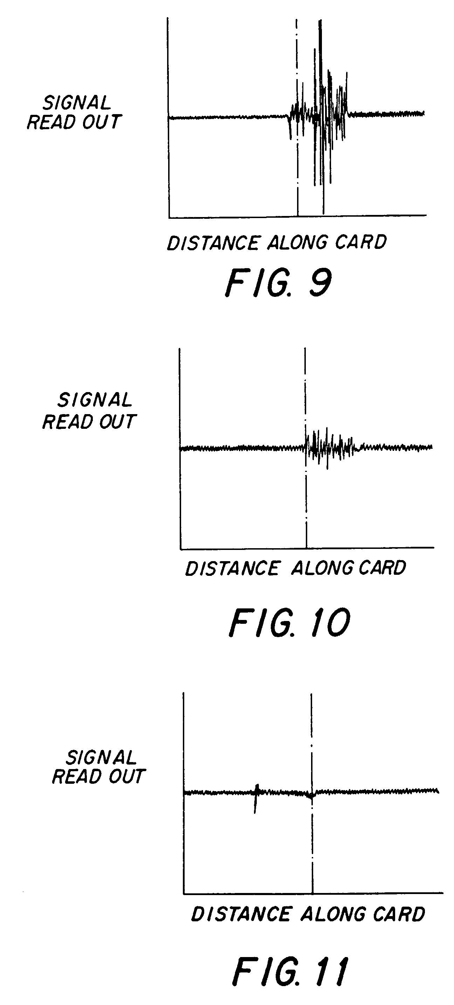

Referring to Figures 9, 10 and 11, there are shown graphical views illustrating the results of such a test on cards made, respectively, not according to the invention (Fig. 9), and according to the invention (Figs. 10 and 11). The graphs are plots of signal read out versus distance along the card.

Figure 9 is the test results of a card made as follows:

From 84% by weight of high density polyethylene sold by solvate under the grade designation Solvay T50-4400 and 16% by weight of magnetic particles sold by Toda Kogyo Corp. under the grade designation MC-140 are dry mixed together and introduced into a Welding Engineers Inc. twin screw compounding machine having counter-rotating non-intermeshing flights. The temperature of the melt was 219°C (426°F) and the barrel profile range for the extruder was 195°C-213°C (384-415°F), and the material is extruded through an orifice and topped to prepare pellets of high density polyethylene containing the magnetic particles.

A double reverse flight compounding section was added to the screw profile of the twin screw compounder to improve polymer-additive mixing through intense shear. Sufficient high density polyethylene pellets containing the Toda Kogyo Corp. magnetic particles MC-140 prepared above to provide a final magnetic concentration of 0.132%, 14.85% of titanium dioxide and the balance high density polyethylene are compounded directly in the Welding Engineers twin screw compounding machine and injection molded into a mold in the configuration of the card in a 250 ton VanDorn molding machine using an ASTM plaque, thickness 0.76 mm (0.030"), 76 mm (3") long, and 51 mmm (2") wide.

Figures 10 and 11 are test results of cards, according to the invention, Examples 2 and 9 described above.

Each card was magnetized with a d.c. field of 11,000 Oersted. The cards were swiped through a card reader. The card reader is equipped with a 15 mil trackwidth magneto-resistive head providing media noise limited performance. The graphs of Figs. 9, 10 and 11 represent the resultant signal. For each card, the output signal voltage was measured and analyzed for the Root Mean Square (RMS) value. System noise level was about 4mV RMS. The RMS values for each card are given in Table I.

**TABLE I**

| Sample | RMS (mV) |
|---|---|
| Fig. 9 | 60.1 |
| Fig. 10 | 18.5 |
| Fig. 11 | 10.4 |

Thus, the phrase "uniformly dispersed throughout" as applied to the disbursement of magnetic particles throughout a solid plastic card can be defined as a card which, when subject to the above described test, produces an RMS voltage no greater than 20mV.

It is evident for the man skilled in the art that the present invention could also incorporate conventional feature for magnetically encoded cards such as magnetic strripe or stripes, chips or any combination thereof.

## Claims

1. A magnetically encodable card comprising a body having upper and lower surfaces and first, second, third, and fourth edges, said body being formed of a plastic material having magnetic particles uniformly dispersed throughout the plastic material.

2. The magnetically encodable card of claim 1, wherein the volume of said magnetic particles in said plastic material is in a range from substantially 0.001 percent to substantially 0.03 percent by volume of said plastic material, not affecting the plastic transparency or color of the plastic material.

3. The magnetically encodable card of claim 1, wherein said volume of magnetic particle in said plastic material is in a range from substantially 0.01 percent to substantially 0.03 percent by volume of said plastic material.

4. The magnetically encodable card of any of claims 1 to 3, wherein said magnetic particles are of high coercivity material having a coercivity greater than 3000 Oersted.

5. The magnetically encodable card of any of claims 1 to 4, wherein said data is magnetically recorded on one or more of said surfaces of said card.

6. The magnetically encodable card of any of claims 1 to 5, wherein data is magnetically recorded on at least one of said edges of said card.

7. The magnetically encodable card of any of claims 1 to 6, wherein said magnetic particles are of barium or strontium ferrite material or mixtures thereof.

8. The magnetically encodable card of any of claims 1 to 7, wherein said card includes a magnetic stripe, a memory chip, or both.

9. A method of making a magnetically encodable card which comprises forming a dispersion of ferromagnetic particles in an organic fluid medium, forming a composite by intimately combining the dispersion with a thermoplastic resin plasticized by the organic fluid medium and forming the composite into an encodable card.

10. The method of Claim 9, wherein the ferromagnetic particles are barium ferrite, strontium ferrite or mixtures thereof.

11. The method of Claim 9 or 10, wherein the dispersion contains a dye, a colored pigment, a white pigment, a lubricant, an optical brightener, an antioxidant or a combination thereof.

12. The method of any of claims 9 to 11, wherein the volume of magnetic particles in the card is less than 0.1 percent.

13. The method of any of claims 9 to 11, wherein the volume of magnetic particles in the card is less than 0.03 percent.

14. The method of Claim 1 wherein the volume of the magnetic pigment in the card achieves a neutral reflection density.
